# EUROPEAN PATENT SPECIFICATION

(11) **EP 2 330 837 B1**
(45) Date of publication and mention of the grant of the patent: **02.09.2015**
(21) Application number: 09178126.0
(22) Date of filing: 04.12.2009
(51) Int. Cl.: H04W 4/16, H04W 52/02, H04M 1/73

(54) **System, method and device for maintaining a communication session suspended for servicing of power supply**
System, Verfahren und Vorrichtung zur Aufrechterhaltung einer durch Wartung der Stromversorgung unterbrochenen Kommunikationssitzung
Système, procédé et dispositif pour maintenir une session de communication interrompue pour l'entretien de l'alimentation électrique

(43) Date of publication of application: 08.06.2011
(73) Proprietor: BlackBerry Limited, Waterloo, ON N2K 0A7 (CA)
(72) Inventor: Yach, David, Paul, Waterloo Ontario N2L 3W8 (CA); Gisby, Douglas, Rolling Meadows, IL 60005 (US)
(74) Representative: MERH-IP Matias Erny Reichl Hoffmann

(56) References cited:
- EP-A1- 2 009 887
- EP-A1- 2 093 968
- EP-A2- 1 096 762
- WO-A2-03/010941
- US-A1- 2007 004 411

## Description

### FIELD

The present application relates to wireless handheld telephony and, more particularly, to systems, methods and devices for maintaining a communication session which has been suspended for servicing of a power supply.

### BACKGROUND

Telephony devices frequently include power supplies which may need to be serviced during a communication session. For example, a battery power supply may run low and/or die during a conversation. This may cause the communication session to be abruptly terminated, possibly without warning to one or either party to the communication. A communication session may need to be re-established after the power supply has been serviced by, for example, one party re-dialingthe number of the other party in orderto resume the conversation. This may be time consuming and frustrating to both users, especially where one party is not aware of the reason the communication was terminated. There is a need for improved devices and methods for allowing a user of a telephony device, such as a wireless telephone, to service the power supply of the telephony device without ending the communication session. For related background, WO-03/010941-A2 describes a method and system for transferring a cellular phone call by automatically switching cellular telephone calls when the battery power level dips below a predetermined threshold.

### SUMMARY

In one aspect, the present disclosure provides an enterprise telephony server configured to maintain a communication session previously established between a first telephony device and at least one second telephony device, by: receiving from the first telephony device a signal indicating that a power supply for the first telephony device should be serviced; placing the previously-established communication session in a hold state; receiving from the first telephony device a signal indicating that the power supply has been serviced; and removing the previously established communication session from the hold state.

In another aspect, the present disclosure provides a method of maintaining a communication session previously established between a first telephony device and at least one second telephony device, the first telephony device comprising at least one data processor and media readable bythe at least one data processor comprising coded program instructions, the method comprising: receiving from the first telephony device a signal indicating that a power supply for the first telephony device should be serviced; placing the previously established communication session in a hold state; receiving from the first telephony device a signal indicating that the power supply has been serviced; and removing the previously established communication session from the hold state.

In another aspect, the present disclosure provides a handheld telephony device controlled by an enterprise server comprising a power supply, at least one wireless signal receiver, at least one wireless signal transmitter, at least one data processor, and media readable by the at least one data processor comprising coded program instructions adapted for maintaining a communication session previously established between the handheld telephony device and at least one second telephony device by: detecting that the power supply should be serviced; providing to the enterprise server a first signal indicating that the power supply should be serviced; upon completion of a servicing of the power supply, providing the enterprise server with a second signal indicating that the power supply has been serviced and resuming the previously established communication session.

Other aspects of the present disclosure will be apparent to those of skilled in the relevant arts from a review of the following detailed description in conjunction with the drawings.

### BRIEF DESCRIPTION OF THE DRAWINGS

Reference will now be made, by way of example, to the accompanying drawings which show example embodiments of subject matter disclosed herein, and in which:
Figure 1 shows a schematic diagram of an example system suitable for use in managing telephone and other communications in accordance with the disclosure herein;
Figures 2-5 show schematic diagrams of examples of embodiments of details of a system such as that shown in Figure 1;
Figure 6 shows a schematic diagram of a system comprising wireless handheld telephony devices suitable for use in implementing the systems, devices, and methods disclosed herein;
Figure 7 provides a schematic diagram of an example of a system for managing telephone and other communications in accordance with the disclosure herein;
Figures 8 and 9 are signaling diagrams showing examples of signal exchanges suitable for use in managing call sessions in accordance with the disclosure herein;
Figure 10 shows a schematic flow diagram of an example of a method of maintaining an ongoing communication in accordance with the disclosure herein; and
Figure 11 is a signaling diagram generally showing an example of a signal exchange suitable for use in maintaining a communications session during the servicing of a power source in accordance with the disclosure herein.

Similar reference numerals may have been used in differentfiguresto denote similar components.

### DESCRIPTION OF EXAMPLE EMBODIMENTS

Embodiments of the present application are not limited to any particular operating systems, wireless handheld telephony device architectures, server architectures, or computer programming languages.

The present application relates to the control and management of communications. Although reference may be made to "calls" in the description of example embodiments below, it will be appreciated that aspects of the described systems and methods are applicable to session-based communications in general and not limited to voice calls. It will also be appreciated that the systems and methods may not be limited to sessions and may be applicable to messaging-based communications in some embodiments.

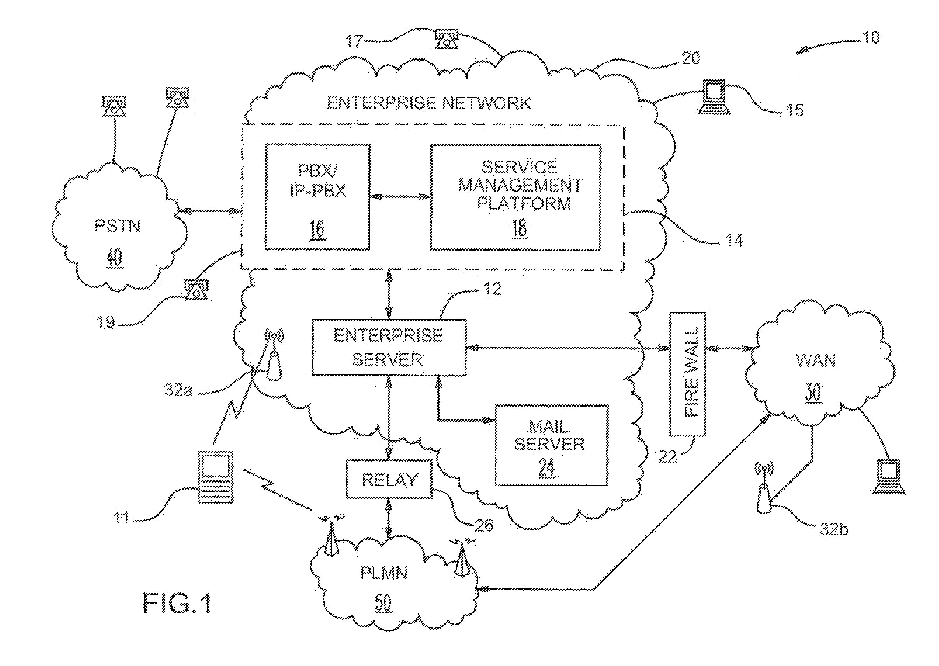

Reference is now made to Figure 1, which shows, in block diagram form, an example of a system, generally designated 10, for the control and management of communications, suitable for use in implementing systems and methods disclosed herein. In the embodiment shown, system 10 includes an enterprise or business communications system 20, which may include a local area network (LAN). In the description below, the enterprise or business system 20 may be referred to as an enterprise network 20. It will be appreciated that the enterprise network 20 may include more than one network and may be located in multiple geographic areas in some embodiments.

Enterprise network 20 may be connected, for example through a firewall 22, to a wide area network (WAN) 30, such as the Internet. The enterprise network 20 may also be connected to a public switched telephone network (PSTN) 40 via direct inward dialing (DID) trunks or primary rate interface (PRI) trunks.

Enterprise network 20 may also communicate with a public land mobile network (PLMN) 50, which may also be referred to as a wireless wide area network (WWAN) or, in some cases, a cellular network. Connection with the PLMN 50 may be made via a relay 26, as known in the art.

Enterprise network 20 may also provide one or more wireless local area networks (WLANs) 32a featuring wireless access points. Other WLANs 32 may exist outside the enterprise network 20. For example, WLAN 32b may be connected to WAN 30.

System 10 may include and/or interact with a number of enterprise-associated mobile devices 11 (only one shown). Mobile device(s) 11 may include devices equipped for cellular communication through the PLMN 50, mobile devices equipped for Wi-Fi communications over one of the WLANs 32, and/or dual-mode devices capable of both cellular and WLAN communications. WLANs 32 may be configured in accordance with one of the IEEE 802.11 specifications.

It will be understood that mobile devices 11 typically include one or more radio transceivers and associated processing hardware and software to enable wireless communications with the PLMN 50 and/or one or more WLANs 32. In various embodiments, PLMN 50 and mobile devices 11 may be configured to operate in compliance with any one or more of a number of wireless protocols, including GSM, GPRS, CDMA, EDGE, UMTS, EvDO, HSPA, 3GPP, or a variety of others. It will be appreciated that a mobile device 11 may roam within the PLMN 50 and across PLMNs, in for example any of a variety of known manners, as the user moves. In some instances, the dual-mode mobile devices 11 and/orthe enterprise network 20 are configured to facilitate roaming between the PLMN 50 and a WLAN 32, and are thus capable of seamlessly transferring sessions (such as voice calls) from a connection with the cellular interface of the dual-mode device 11 to the WLAN 32 interface of the dual-mode device 11, and vice versa.

Enterprise network 20 typically includes a number of networked servers, computers, and other devices. For example, the enterprise network 20 may connect one or more desktop or laptop computers 15 (one shown). The connection may be wired or wireless in some embodiments. The enterprise network 20 may also connect to one or more digital telephone sets 17 (one shown).

Enterprise network 20 may include one or more mail servers, such as mail server 24, for coordinating the transmission, storage, and receipt of electronic messages for client devices operating within the enterprise network 20. Typical mail servers include the Microsoft Exchange Server™ and the IBM Lotus Domino™ server. Each user within the enterprise typically has at least one user account within the enterprise network 20. Associated with each user account is message address information, such as an e-mail address. Messages addressed to a user message address are stored on the enterprise network 20 in the mail server 24. The messages may be retrieved by the user using a messaging application, such as an e-mail client application. The messaging application may be operating on a user's computer 15 connected to the enterprise network 20 within the enterprise. In some embodiments, the user may be permitted to access stored messages using a remote computer, for example at another location via the WAN 30 using a VPN connection. Using the messaging application, the user may also compose and send messages addressed to others, within or outside the enterprise network 20. The messaging application causes the mail server 24 to send a composed message to the addressee, often via the WAN 30.

Relay 26 can serve to route messages received over the PLMN 50 from the mobile device 11 to the corresponding enterprise network 20. Relay 26 can also serve to push messages from the enterprise network 20 to the mobile device 11 via the PLMN 50.

In the embodiment shown, enterprise network 20 also includes an enterprise server 12. Together with relay 26, enterprise server 12 can function to redirect, copy, or relay incoming e-mail messages addressed to a user's e-mail address within the enterprise network 20 to the user's mobile device 11 and to relay incoming e-mail messages composed and sent via the mobile device 11 out to the intended recipients within the WAN 30 and/or elsewhere. Among other functions, enterprise server 12 and relay 26 together can facilitate "push" e-mail service for the mobile device 11 enabling the user to send and receive e-mail messages using the mobile device 11 as though the user were connected to an e-mail client within the enterprise network 20 using the user's enterprise-related e-mail address, for example on computer 15.

As is typical in many enterprises, an enterprise network 20 can include one or more Private Branch eXchanges (although in various embodiments the PBX(s) may include standard PBX(s) and/or IP-PBX(s), for simplicity the description below uses the term PBX to refer to both) 16 having a connection with the PSTN 40 for routing incoming and outgoing voice calls to and from digital and/or analog telephones or other telephony devices for the enterprise. PBX 16 is connected to the PSTN 40 via DID trunks or PRI trunks, for example. The PBX 16 may use ISDN signaling protocols for setting up and tearing down circuit-switched connections through the PSTN 40 and related signaling and communications. In some embodiments, PBX 16 may be connected to one or more conventional analog telephones 19. The PBX 16 may also be connected to the enterprise network 20 and, through it, to telephone terminal devices, such as digital telephone sets 17, softphones operating on computers 15, etc. Within the enterprise, each individual may have an associated extension number, sometimes referred to as a PNP (private numbering plan), or direct dial phone number. Calls outgoingfrom the PBX 16 to the PSTN 40 or incoming from the PSTN 40 to the PBX 16 are typically circuit-switched calls. Within the enterprise, *e.g.* between the PBX 16 and terminal devices, voice calls are often packet-switched calls, for example Voice-over-IP (VoIP) calls.

An enterprise network 20 may include a Service Management Platform (SMP) 18 for performing aspects of messaging or session control, such as call control and advanced call processing features. SMP 18 may, in some embodiments, also perform various forms of media handling. Collectively SMP 18 and PBX 16 may be referred to as an enterprise communications platform, generally designated 14. It will be appreciated thatan enterprise communications platform 14 and, in particular, an SMP 18, can be implemented on one or more servers having suitable communications interfaces for connecting to and communicating with the PBX 16 and/or DID/PRI trunks. Although the SMP 18 may be implemented on a stand-alone server, it will be appreciated that it may be implemented into an existing control agent/server as a logical software component. As will be described below, the SMP 18 may be implemented as a multi-layer platform.

For devices such as telephony devices 11, 19 controlled by or otherwise associated with it, enterprise communications platform 14 can implement switching to set up and connect session legs, and may provide conversion between, for example, a circuit-switched call and a VoIP call, or connect legs of other media sessions. Such calls/sessions may be set up and modified on behalf of devices 11, 19 and any desired telephony devices, within or outside enterprise network 20, including for example devices 19 connected to PSTN 40. In some embodiments, in the context of voice calls the enterprise communications platform 14 provides a number of additional functions including automated attendant, interactive voice response, call forwarding, voice mail, etc. It may also implement certain usage restrictions on enterprise users, such as blocking international calls or 1-900 calls. In many embodiments, Session Initiation Protocol (SIP) may be used to set-up, manage, and terminate media sessions for voice calls. Other protocols may also be employed bythe enterprise communications platform 14, for example, Web Services, Computer Telephony Integration (CTI) protocol, Session Initiation Protocol for Instant Messaging and Presence Leveraging Extensions (SIMPLE), and various custom Application Programming Interfaces (APIs), as will be described in greater detail below.

Among capabilities of enterprise communications platform 14 may be the ability to extend the features of enterprise telephony to mobile device(s) 11. For example, an enterprise communications platform 14 may allow mobile device(s) 11 to perform functions akin to those normally available on a standard office telephone, such as digital telephone set 17 or analog telephone set 15. Example features may include direct extension dialing, enterprise voice mail, conferencing, call transfer, call park, etc. As further described elsewhere herein, enterprise communications platform 14 may be configured to provide functions such as transfer of corresponding ends of existing communications sessions from one or more mobile devices 11 to wired telephony devices 19 associated with platform 14.

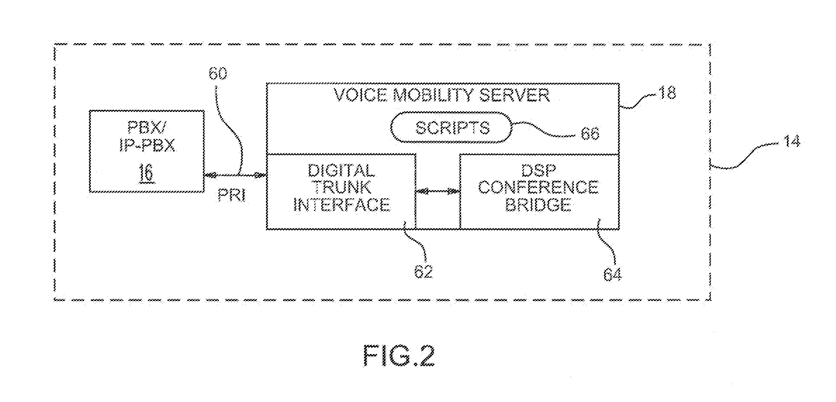

Reference is now made to Figures 2 to 4, which show example embodiments of the enterprise communications system 14. Again, although references are made below to "calls" or call-centric features it will be appreciated that the architectures and systems depicted and described are applicable to session-based (e.g., voice) communications in general and, in some instances, to text, image, or other messaging-based communications.

Figure 2 illustrates an embodiment intended for use in a circuit-switched TDM context. The PBX 16 is coupled to the SMP 18 via PRI connection 60 or other suitable digital trunk. In some embodiments, the PRI connection 60 may include a first PRI connection, a second PRI connection, and a channel service unit (CSU), wherein the CSU is a mechanism for connecting computing devices to digital mediums in a manner that allows for the retiming and regeneration of incoming signals. It will be appreciated that there may be additional or alternative connections between the PBX 16 and the SMP 18.

In such embodiments, an SMP 18 can assume control over both call processing and the media itself. This architecture may be referred to as "First Party Call Control". Many of the media-handling functions normally implemented by the PBX 16 may be handled by the SMP 18 in this type architecture. Incoming calls addressed to any extension or direct dial number within the enterprise, for example, may first be routed to the SMP 18. Thereafter, a call leg may be established from the SMP 18 to the called party within the enterprise, and the two legs may be bridged. Accordingly, the SMP 18 includes a digital trunk interface 62 and a digital signal processing (DSP) conferencing bridge 64. The DSP conferencing bridge 64 performs the bridging of calls for implementation of various call features, such as conferencing, call transfer, etc. The digital trunk interface 62 may be implemented as a plurality of telephonic cards, e.g. Intel Dialogic cards, interconnected by a bus and operating under the control of a processor. The digital trunk interface 62 may also be partly implemented using a processor module such as, for example, a Host Media Processing (HMP) processor.

SMP 18 may implement various scripts 66 for managing call processing. Such scripts 66 may for example be implemented as software modules, routines, functions, etc., stored in non-volatile memory and executed by the processor of the SMP 18. Such scripts 66 may implement call flow logic, business logic, user preferences, call service processes, and various feature applications.

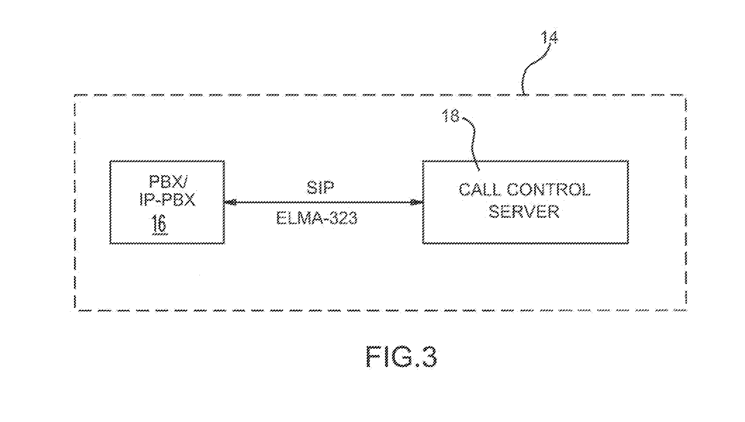

Figure 3 shows another embodiment in which the PBX 16 performs the functions of terminating and/or bridging media streams, but call control functions are largely handled by the SMP 18. In this embodiment, the SMP 18 may be referred to as a call control server 18. Such an architecture may be referred to as "Third-Party Call Control".

The call control server 18 may be coupled to the PBX 16 through, for example the LAN, enabling packet-based communications and, more specifically, IP-based communications. In one embodiment, communications between the PBX 16 and the call control server 18 are carried out in accordance with SIP. In other words, the call control server 18 can use SIP-based communications to manage the set up, tear down, and control of media handled by the PBX 16. In one example embodiment, the call control server 18 may employ a communications protocol conforming to the ECMA-269 or ECMA-323 standards for Computer Supported Telecommunications Applications (CSTA).

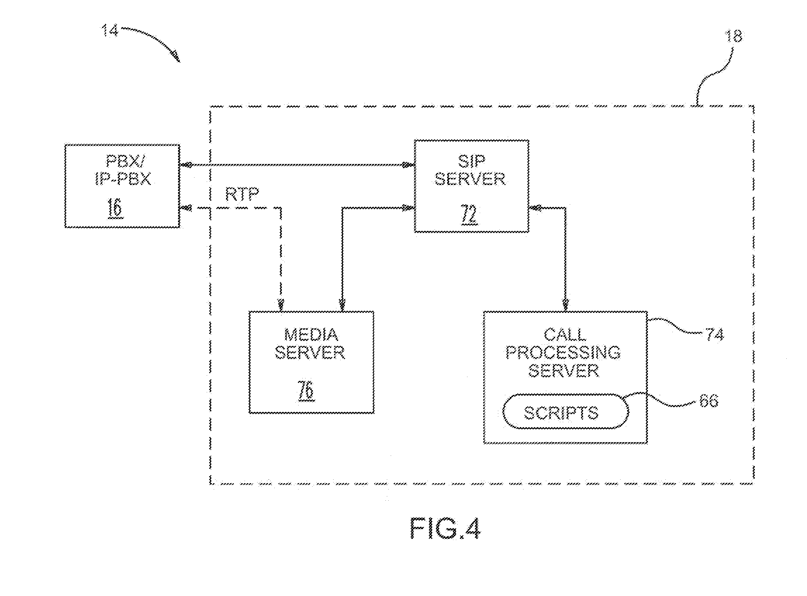

Figure 4 shows yet another embodiment of an enterprise communications system 14. This embodiment reflects the adaptation of an existing set of call processing scripts to an architecture that relies on third-party call control, with separate call control and media handling. In this embodiment SMP 18 includes a call processing server 74. The call processing server 74 can implement scripts or other programming constructs for performing call handling functions. SMP 18 can also include an SIP server 72 and a media server 76. The separate SIP server 72 and media server 76 logically separate call control from media handling functions. SIP server 72 can interact with call processing server 74 using a computer-implemented communications handling protocol, such as one of the ECMA-269 or ECMA-323 standards. These standards prescribe XML-based messaging for implementing Computer Supported Telecommunications Applications (CSTA).

SIPserver 72 can interact with media server 76 usingSIP-based media handling commands. For example, the SIP server 72 and media server 76 may communicate using Media Server Markup Language (MSML) as defined in IETF document Saleem A., "Media Server Markup Language", Internet Draft, draft-saleem-msml-07, August 7, 2008. The media server 76 may be configured to perform Host Media Processing (HMP).

It will be appreciated by those skilled in the relevant arts that a wide variety of architectures or configurations for the enterprise communications system 14 are suitable for use in implementing the systems and methods disclosed herein.

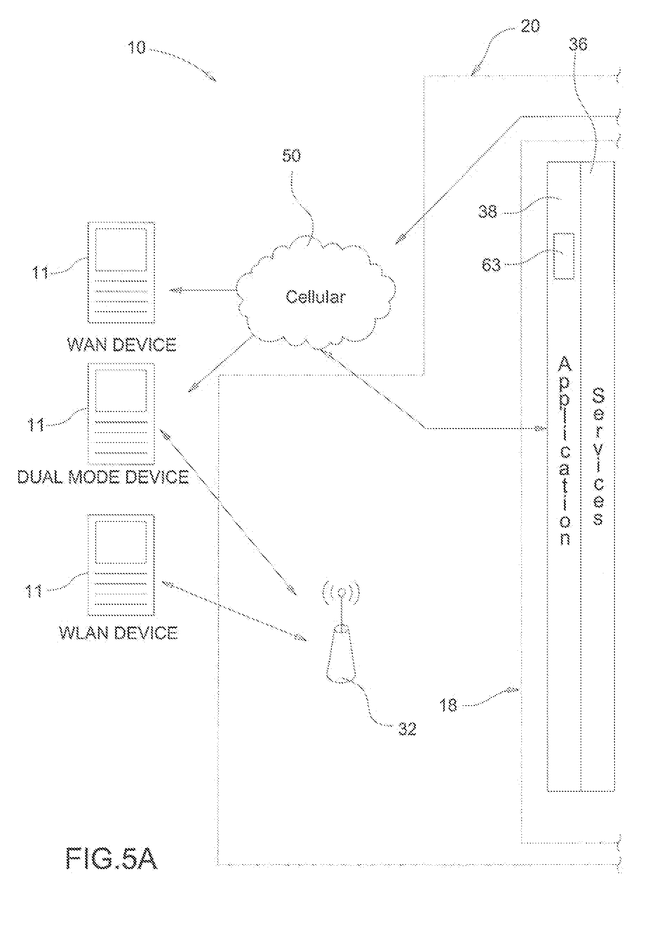

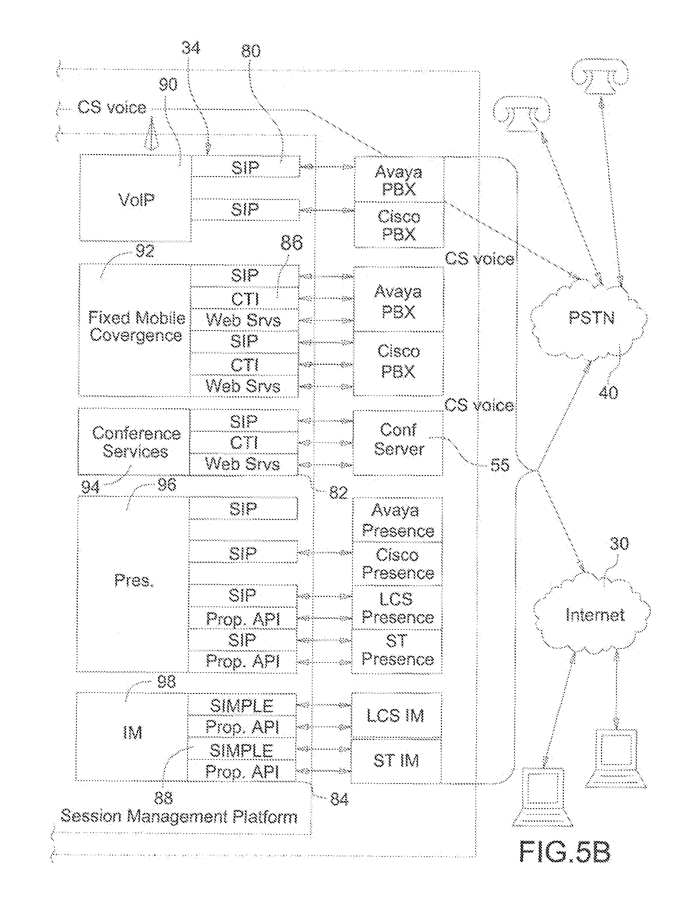

Reference is now made to Figures 5A and 5B, collectively referred to as Figure 5, which shows an embodiment of an enterprise communications system 14 with a Third Party Call Control architecture. In this embodiment, the SMP 18 comprises a multi-layer platform that includes a protocol layer 34, a services layer 36 and an application layer 38. Protocol layer 34 includes a plurality of interface protocols configured for enabling operation of corresponding applications in the application layer 38. The services layer 36 includes a plurality of services that can be leveraged by the interface protocols to create richer applications. Application layer 38 includes a plurality of applications that are exposed out to the communication devices and that leverage corresponding ones of the services and interface protocols for enabling the applications.

Specifically, protocol layer 34 preferably implements protocols which allow media to be controlled separate from data. For example, protocol layer 34 can include, among other things, a Session Initiation Protocol or SIP 80, a Web Services protocol 82, an Application Programming Interface or API 84, a Computer Telephony Integration protocol or CTI 86, and a Session Initiation Protocol for Instant Messaging and Presence Leveraging Extensions or SIMPLE protocol 88. It is contemplated that the interface protocols 80-88 are plug-ins that can interface directly with corresponding servers in the enterprise network 20, which will be further described below.

For purposes of this disclosure, SIP 80 is described, although it is to be appreciated that a system 10 can operate using the above-disclosed or any other suitable protocols. As known by those skilled in the relevant arts, SIP is the IETF (Internet EngineeringTask Force) standard for multimedia session management, and more specifically is an application-layer control protocol for establishing, maintaining, modifying and terminating multimedia sessions between two or more endpoints. As further known by those skilled in the relevant arts, the SIP protocol 80 includes two interfaces for signaling: SIP-Trunk (hereinafter referred to as "SIP-T") and SIP-Line (hereinafter referred to as "SIP-L"). Specifically, the SIP-T interface is utilized when the endpoint is a non-specific entity or not registered (i.e., when communicating between two network entities). In contrast, the SIP-L interface is utilized when the endpoint is registered (i.e., when dialing to a specific extension). The specific operation of the system 10 utilizing SIP 80 will be described in further detail below.

SMP 18 can also include a plurality of enablers, including for example VolP enabler 90, Fixed Mobile Convergence or FMC enabler 92, conference services/call and/or session transfer enabler 94, a presence enabler 96, and/or an Instant Messaging or IM enabler 98. Each of the enablers 90-98 can be used by corresponding services in the services layer 36 that combine one or more of the enablers. Each of the applications in the application layer 38 can then be combined with one or more of the services to perform the desired application. For example, a phone call service may use the VoIP or PBX enabler, and an emergency response application may use the phone call service, an Instant Messenger service, a video call service, and email service and/or a conference service.

An application layer 38 such as that shown in Figure 5 may include one or more conference services applications 63 that, together with the conference services enabler 94, enables multiple communication devices (including desk telephones and personal computers) to participate in a conference call through use of a centralized conference server 55. As seen in Figure 5, the conference server 55 can be provided in the enterprise network 20 and can be in communication with the conference services enabler 94 preferably through the SIP protocol 80, although it is recognized that additional protocols that control media separate from data may be appropriate, such as the Web Services protocol 82 or the CTI protocol 86. Conference call server 55 can be configured for directing media and data streams to and from one or more communication devices (i.e., mobile devices 11, telephones 17, and computers 15).

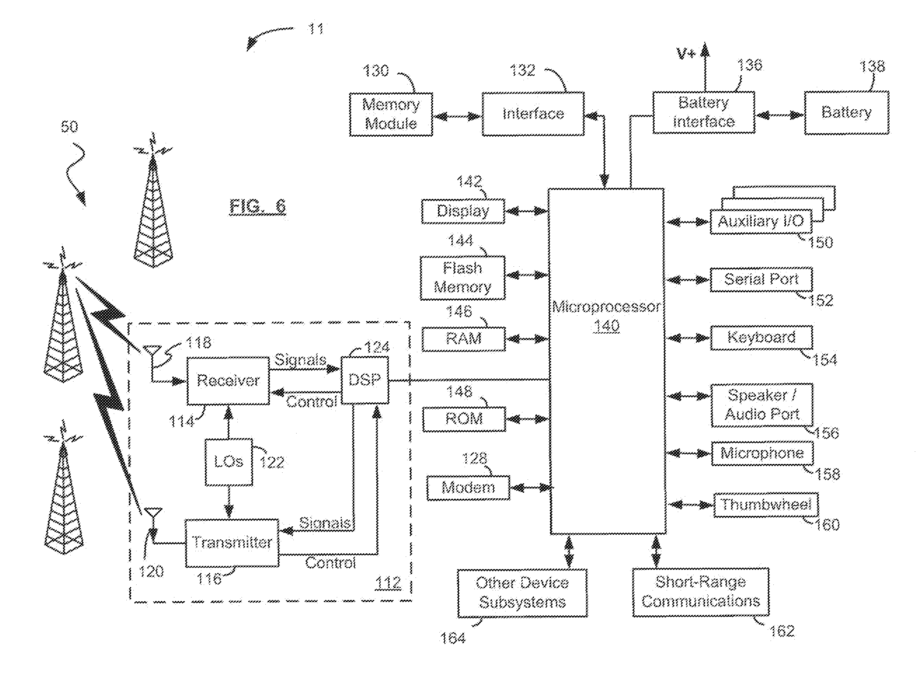

Reference is now made to Figure 6, which shows a schematic block diagram of a wireless handheld telephony device 11 suitable for use in conjunction with the system 10 described above in relation to Figure 1.

In various embodiments, a wireless handheld telephony device 11 is a two-way mobile communication device having at least voice and data communication capabilities, including the capability to communicate with other computer systems. Depending on the functionality(ies) provided by the wireless handheld telephony device 11, it may be referred to as a data messaging device, a two-way pager, a cellular telephone with data messaging capabilities, a wireless Internet appliance, a data communication device (with or without telephony capabilities), a clamshell device, or a flip-phone. The wireless handheld telephony device 11 may communicate with any one of a plurality of fixed transceiver stations within its geographic coverage area.

A wireless handheld telephony device 11 may incorporate a communication subsystem 112, which can include one or more receivers 114, transmitters 116, and/or associated components, such as one or more antenna elements 118 and 120, local oscillators (LOs) 122, and one or more processing modules such as a digital signal processor (DSP) 124. In various embodiments, antenna elements 118 and 120 may be embedded or internal to the wireless handheld telephony device 11. As will be apparent to those skilled in the relevant arts, the particular design of the communication subsystem 112 will depend, in part, on the system(s), such as enterprise network 20, the PLMN 50 and/or the WLANs 32, with which the wireless handheld telephony device 11 is intended to communicate.

A wireless handheld telephony device 11 may send and receive communication signals to and from, for example, an enterprise server 20 through, for example, the PLMN 50 and/or one of the WLANs 32. Signals received by the antenna 118 may be input to the receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decodingto be performed bythe DSP 124. Outgoing signals to be processed by DSP 124 prior to transmission by implementation, for example, of modulation and encoding processes. Such DSP-processed signals may be input to the transmitter 116 for digital-to-analog (D/A) conversion, frequency up conversion, filtering, amplification, and transmission via the antenna 120. In addition to processing of communication signals, a DSP 124 can also provide for receiver and transmitter control. For example, gains applied to communication signals in the receiver 114 and the transmitter 116 may be adaptively controlled through automatic gain control algorithms implemented in or by a DSP 124.

Network access may be associated with a subscriber or user of a wireless handheld telephony device 11 via a memory module, such as a memory module 130, which may include a Subscriber Identity Module (SIM) card for use in a GSM network or a Universal Subscriber Identity Module (USIM) card for use in a Universal Mobile Telecommunication System (UMTS). Such a SIM card may be inserted in or connected to an interface 132 of the wireless handheld telephony device 11. Alternatively, or in addition, the wireless handheld telephony device 11 may have an integrated identity module for use with systems such as Code Division Multiple Access (CDMA) systems.

A wireless handheld telephony device 11 may also include a battery interface 136 for receiving one or more rechargeable batteries 138. Battery(ies) 138 can provide electrical power to some or all of the electrical circuitry in the wireless handheld telephony device 11, and the battery interface 136 provides a mechanical and electrical connection for the battery 138. The battery interface 136 can be coupled to a regulator (not shown) which provides power V+ to the circuitry of the wireless handheld telephony device 11.

A wireless handheld telephony device 11 can include one or more microprocessors 140 for control of the overall operation of the wireless handheld telephony device 11. for example, under control of microprocessor(s) 140 communication functions, including at least data and voice communications, may performed through the communication subsystem 112. Microprocessor(s) 140 may also interact with additional device subsystems such as modem 128, primary display 142, optional secondary display 143, flash memory 144, random access memory (RAM) 146, read-only memory (ROM) 148, auxiliary input/output (I/O) subsystems 150, data port(s) such as Universal Serial Bus (USB) port 152, keyboard or keypad 154, speaker or audio port(s) 156 for connecting to, for example a set of headphones or an earpiece, microphone 158, clickable thumbwheel or thumbwheel 160, open/close sensor 161, short-range communications subsystem 162, and any other device subsystem(s) generally designated as 164. Some of the subsystems shown in Figure 6 perform communication-related functions, whereas other subsystems may provide "resident" or on-device functions. Notably, some subsystems, such as the keypad 154, the primary display 142, the secondary display 143, and the clickable thumbwheel 160, for example, may be used for both communication-related functions, such as displaying notifications or entering a text message for transmission through, for example, the PLMN 50 and/or one of the WLANs 32, and executing device-resident functions such as a clock, a calculator or a task list. Operating system software used by the microprocessor 140 is preferably stored in a persistent store such as the flash memory 144, which may alternatively be the ROM 148 or similar storage element. Those skilled in the art will appreciate that the operating system, specific device applications, or parts thereof, may be temporarily loaded into a volatile store such as the RAM 146.

A microprocessor 140, in addition to its operating system functions, may enable execution of software applications on a wireless handheld telephony device 11. A predetermined set of applications that control basic device operations, including data and voice communication applications, will normally be installed on the wireless handheld telephony device 11 during or after manufacture. A wireless handheld telephony device 11 may include a personal information manager (PIM) application having the ability to organize and manage data items relating to a user such as, but not limited to, instant messaging, email, calendar events, voice mails, appointments, and task items. One or more memory stores may be available on the wireless handheld telephony device 11 to facilitate storage of information, such as the flash memory 144, the RAM 146, the ROM 148, the memory module 130, or other types of memory storage devices or FLASH memory cards represented by the other device subsystems 164, such as Secure Digital (SD) cards or mini SD cards, etc.

PIM and/or media applications may have the ability to implement sending and receiving of data items via PLMN 50 and/or one of the WLANs 32 or via a link to a computer system. Suitable communications links to involved computer systems may be established via a serial port 152 and/or a short-range communications subsystem 162. In some embodiments, PIM and/or media data items are seamlessly combined, synchronized, and updated, for example, through the PLMN 50 and/or one of the WLANs 32, with the wireless handheld telephony device user's corresponding data items stored and/or associated with a host computer system thereby creating a mirrored or partially mirrored host computer on the wireless handheld telephony device 11 with respect to such items. This may be advantageous where, for example, the host computer system is the wireless handheld telephony device user's office computer system. Additional applications may also be loaded onto the wireless handheld telephony device 11 through, for example, the PLMN 50 and/or one of the WLANs 32, the auxiliary I/O subsystem 150, the serial port 152, the short-range communications subsystem 162, or any other suitable subsystem 164, and installed by a user in the RAM 146 or a non-volatile store such as the ROM 148 for execution by the microprocessor 140. Such flexibility in application installation increases the functionality of the wireless handheld telephony device 11 and may provide enhanced on-device functions, communication-related functions, or both. For example, secure communication applications may enable electronic commerce functions and other such financial transactions to be performed using the wireless handheld telephony device 11.

In a data communication mode, a received data signal representing information such as a text message, an email message, a media file to be transferred, or Web page download can be processed by the communication subsystem 112 and input to the microprocessor 140. The microprocessor 140 can further process the signal for output to the primary display 142, secondary display 143, or alternatively to the auxiliary I/O device 150. A user of a wireless handheld telephony device 11 may also compose data items, such as email messages, for example, using the keypad 154 and/or the clickable thumbwheel 160 in conjunction with the primary display 142 and possibly the auxiliary I/0 device 150. Keypad 154 maybe either a complete alphanumeric keypad or telephone-type keypad. Composed items may be transmitted through the communication subsystem 112 or via the short range communication subsystem 162.

For voice communications, the overall operation of the wireless handheld telephony device 11 may be similar, except that received signals may be output to the speaker or audio port 156 and signals for transmission can be generated by a transducer such as the microphone 158. Alternative voice or audio I/O subsystems, such as a voice message recording subsystem, may also be implemented on the wireless handheld telephony device 11. Although voice or audio signal output is typically accomplished primarily through the speaker or audio port 156, the primary display 142 or the secondary display 143 may also be used to provide an indication of the identity of a calling party or the communication type, duration of a voice call, or other voice call related information. Stereo headphones or an earpiece may also be used in place of the speaker 156.

One or more USB ports 152 are normally implemented in a personal digital assistant (PDA) type communication device for which synchronization with a user's computer is a desirable, albeit optional, component. A USB port 152 can enable a user to set preferences through an external device or software application and can extend the capabilities of the wireless handheld telephony device 11 by providing for information or software downloads to the wireless handheld telephony device 11 other than through the PLMN 50 and/or one of the WLANs 32. The alternate download path may, for example, be used to load software or data files onto the wireless handheld telephony device 11 through a direct, reliable and trusted connection.

Short-range communications subsystem 162 is an additional optional component which can provide for communication between the wireless handheld telephony device 11 and different systems or devices, which need not necessarily be similar devices. For example, a subsystem 162 may include an infrared device and associated circuits and components, or a wireless bus protocol compliant communication mechanism such as a Bluetooth™ communication module to provide for communication with similarly-enabled systems and devices (Bluetooth™ is a registered trademark of Bluetooth SIG, Inc.). In further embodiments, a short-range communications subsystem 162 may include a wireless networking communications subsystem, conforming for example to IEEE 802.11 standards such as one or more of 802.11b, 802.11g, and/or 802.11.

Modem device 128 may, for example, comprise a low-bandwidth modem which can modulate and demodulate data signals to be transmitted over a voice channel. For example, the modem could be a high speed, low-bandwidth modem such as, for example, a 3GPP modem (TS 26.267 or TS 26.268). A modem may also comprise a coder/decoder (also referred to as a codec).

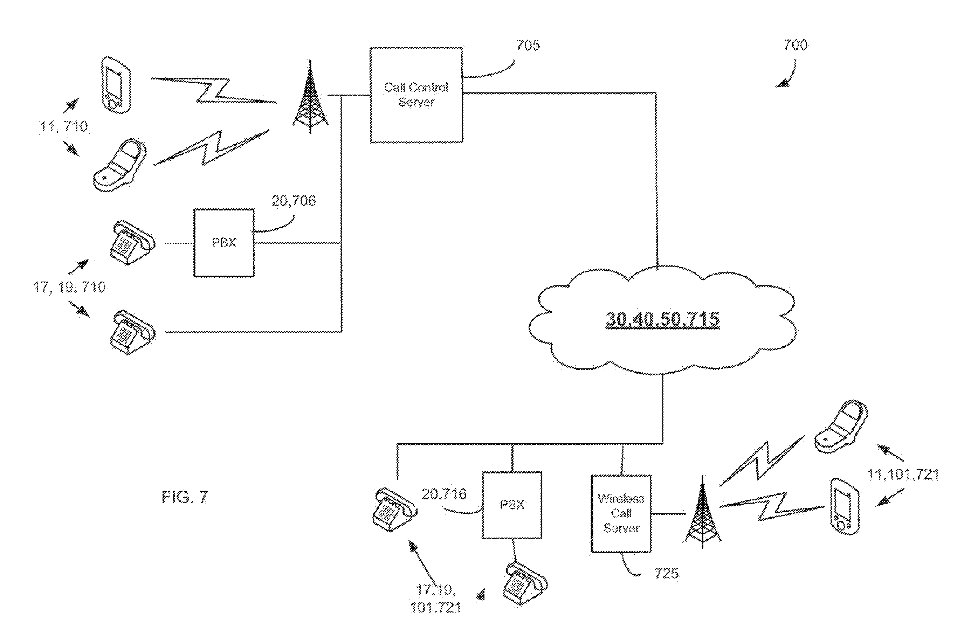

Reference is now made to Figure 7, which shows, in block diagram form, an example system for maintaining a communication session between a wireless handheld telephony device 710, 11 and at least one second telephony device 721 while a power supply of the first telephony device 710 is being serviced. The system comprises one or more telephony devices 11, which may be engaged in an established/ongoing communications with at least one second telephony device 721 through PSTN or other communications cloud or network 715 such as PSTN 40 or PLMN 50 of Figure 1.

Communication cloud 715 may be adapted for carrying voice communications according, for example, to any of the several IP or non-IP protocols described above, or any other suitable protocols or methods. For example, in various embodiments communication clouds 715 may comprise or otherwise interact with a PSTN 40 and/or PLMN 50. Communication cloud 115 may also be capable of carrying image, text or other data. For example, communication cloud 715 may comprise at a WAN 30, such as the internet.

First telephony device 710 can include any type of telephony devices suitable for accomplishing the purposes described herein, including, for example, any landline or wire-line telephones, such as VOIP protocol or other digital telephones sets 17, analog telephone sets 15, or wireless handheld telephony devices 11 accessible through, for example, wireless call server 724. Anytelephony device 710 which might need battery change or other power supply servicing during a communications session will suffice. For example, the first telephony device 710 may be a wireless handheld telephony device such as the wireless handheld telephony device 11 depicted in Figure 6 including, but not limited to, cellular telephones, Blackberry devices, PDA's and other devices described herein. The first telephony device 710 may also be an enterprise telephone accessible through, for example, a PBX 706, 20.

Call control server 705 can comprise any systems, processors and/or other components suitable for use in implementing the systems and functions described herein. For example, call control server 705 can include any or all suitable components of an enterprise network 20 including, for example, any or all of the components a communication platform 14 and/or an enterprise server 12.

The at least one second telephony device 721 can include anytype of telephony devices suitable for accomplishing the purposes described herein, including, but not limited to, landline or wire telephones, such as VOIP protocol or other digital telephone sets 17, analogtelephone sets 15, and/or wireless telephony devices 11 accessible through, for example, wireless call server 725. One or more of the at least one second telephony device 721 may also be enterprise telephones accessible through, for example, a PBX 716. The wireless call server 725 may or may not be the same as the wireless call server 724. The PBX 716 may or may not be the same as the PBX 706.

First telephony device 710 may comprise a power supply such as a battery or the like. For example, the first telephony device 710 may be a wireless handheld telephony device 11 such as is depicted in Figure 6 with a battery 138. In other embodiments, the first telephony device 710 may be a cordless or portable telephony device comprising a wireless handset that communicates, for example, within a limited range via radio waves with a base station connected to a fixed telephone line. The handset of such a cordless or portable telephony device may comprise a power supply such as a battery. The battery may, in some embodiments, be a rechargeable battery which may be recharged, for example, by placing the handset on a handset cradle on the one or more base stations. In other embodiments, the first telephony device 710 may comprise a corded telephone, such as a desk phone, comprising a power cord connected to a power supply such as a wall jack, power outlet, external battery or other external power supply.

A user of a first telephony device 710 may, in various circumstances, need to service the power supply of the telephony device 710 during an ongoing communication. For example, the user of a wireless handheld telephony device 11 or a cordless or portable telephony device 17, 19 described above may lose battery power or have a low battery condition during an ongoing communication. The user of such a first telephony device 710 may wish to maintain the communications session with at least one second telephony device 721 during servicing of the power supply. It may also be necessary or desirable to notify the user(s) of the at least one second telephony device 721 of the need to temporarily suspend the communication session and possibly the reason why the communication is beingsuspended, and to allow the user(s) of the at least one second telephony device 721 alternatives of holding the communications session pending power supply servicing or terminating of the communication session.

In order to maintain a communications session between the first telephony device 710 and the at least one second telephony device 721, the communication session may be placed in a hold state. The call control server 705 may maintain the portion of the communication session, or call leg, between the call control server 705 and the at least one second telephony device 721. The call leg between the first telephony device 710 and the call control server 705 may be lost temporarily while the first telephony device 710 is serviced. Once the first telephony device 710 has been serviced, the call control server 705 may reestablish a connection to the first telephony device 710 and connect the two call legs together.

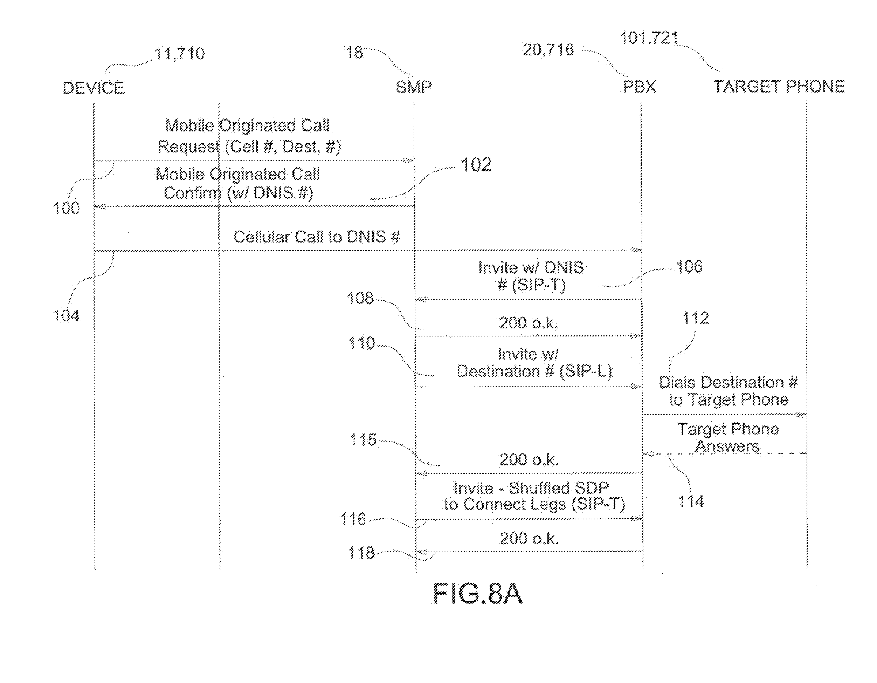

Figure 8A provides a signaling diagram illustrating setup of a call originating from a mobile device 11, 710 to a second telephony device, or target phone, 101, 721 connected, for example, to a Private Branch Exchange Server or PBX 20, 716. First, the device 11, 710 sends a mobile-originated call request with its cellular number and the destination number of the target phone 101, 721 to, for example, an SMP 18 (block 100) associated with the corresponding PBX server 716, 20. In some embodiments, a mobile-originated call request may be sent via a WLAN 30 through an enterprise server 12. In other embodiments, a call request may be sent via a PLMN/PSTN 40, 50 through a PBX 706, 20, for example as an SMS message or using another messaging operation.

The SMP 18 can confirm the call request by, for example, sending a corresponding DNIS number to the originating device 710, 11 (block 102). Next, the device 11 can make a cellular call using the DNIS number, which is received by the PBX 716, 20 (block 104). Where for example the DNIS has been configured in the PBX 716, 20 to be routed to the SMP 18 via SIP-T, in response to the incoming call, the PBX 716, 20 can send an invitation over SIP-T with the DNIS number to the responsible SMP 18 (block 106). The SMP 18 can match the incoming call with the expected call from the mobile, and if correct, acknowledges the invitation by sending a 200 OK signal to the PBX 16, indicating that the mobile call leg is established (block 108).

The SMP 18 can then set up an outgoing call leg to the destination 101, 721. It can for example do this by sending an invitation over SIP-L to the PBX 716, 20 with the destination number of the target phone (block 110). SIP-L is used so that the call can be correctly attributed to the individual within the organization within any call records that are being maintained by the PBX 16. When the invite is received, the PBX 16 dials the destination number to the target phone 101 (block 112), and the target phone 101 answers the call (block 114). When the target phone 101 is answered, the PBX 16 sends a 200 OK signal to the SMP 18 indicating that the target phone 101 is ready to receive data (block 115). The SMP 18 then sends an invite over SIP-T to the PBX 16 and shuffles the SDP (Session Description Protocol, as known to those of ordinary skill in the art) to connect the call legs (block 116). When the call legs are connected, the PBX 16 sends a second 200 OK signal to the SMP 18 (block 118), and the users of the device 11 and target phone 101 can communicate with each other.

Note that between the cellular call leg being established and the outgoing call leg being answered, the mobile user can hear ring tones. These ring tones may be provided by the PBX 16, 716 using the presentation of early media from the outgoing call leg, or they may be generated locally on the device 11, 710 if early media is not available. In the latter case, it may be necessary to localize the ringing tone to match the tone normally heard with a call through the PBX 20, 716.

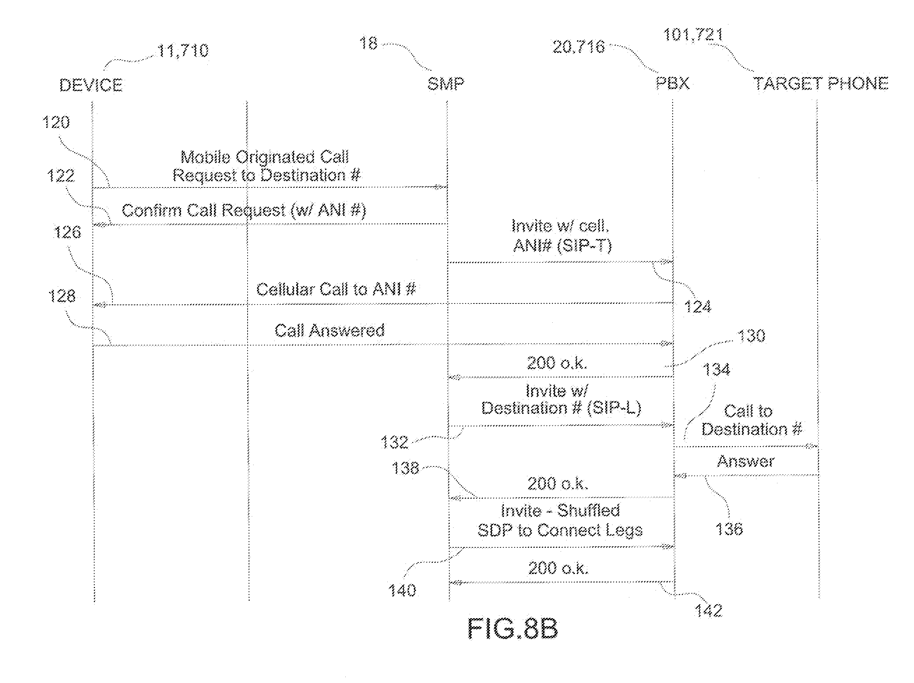

The above description is sometimes known as a "mobile-initiated" call, because the SMP 18 provides the mobile device 710, 11 with the DNIS number into which the mobile device 710, 11 has called. Alternatively, a mobile-originated call can be "PBX-initiated", as shown in Figure 8B. Specifically, in a PBX-initiated call, upon receipt of a mobile-originated call request (block 120), the SMP 18 can confirm receipt of the call to the mobile device 11, 710 with an ANI number (block 122), which the mobile device can use to identify the incoming call from the PBX 716, 20. The PBX 716, 20 can then send an invitation over SIP-T to the PBX 716,20 with the cellular number of the device and the ANI number that is attached to the outgoing call (block 124). Upon receipt of the invitation, the PBX 716, 20 can make a cellular call to the device 710, 11 (block 126), which can be answered by the device (block 128). The device 710, 11 can check the ANI number in the incoming call to confirm if the number is actually from the PBX 716, 20. If the ANI number is stripped for any particular reason, then the device 11, 710 may be configured to answer the call as a regular cellular call, or it may reject the call as unknown. When the device 710, 11 answers the PBX-initiated call, the PBX 716, 20 sends a 200 OK signal to the SMP 18, indicating that the call leg to the device is established (block 130).

In response, the SMP 18 can send an invitation over SIP-L with the destination number of the target phone 721, 101 to the PBX 716, 20 (block 132). When the invitation is received at the PBX 716, 16, the PBX can dial the destination number to the target phone 721, 101 (block 134); the target phone 721, 101 picks up the call (block 136), and a 200 OK signal can be sentfrom the PBX 716, 20 to the SMP 18 (block 138), indicating that the target phone 721, 101 is also ready to receive data. In response to the 200 OK, the SMP 18 sends an invitation to the PBX 16, shuffling the SDP to connect the call legs (block 140). Finally, when the call legs are connected, the PBX 716, 20 can send a second 200 OK signal to the SMP 18, and the users of the device 710, 11 and target phone 721, 101 are able to communicate with each other.

In both instances, SMP 18 can perform third party call control of the two call legs, the PBX 716, 20 remaining in control of the call. The decision of whether to proceed with a mobile-initiated call or a PBX-initiated call can be set by policy. Specifically, the option to select either mobile-initiated or PBX-initiated calls is a feature which can be provided in the SMP 18, and an administrator for the enterprise network 20 can determine which setting to use. For example, in some cases it may be more cost effective for the corporation to utilize PBX-initiated calls rather than mobile-initiated calls, and vice versa. However, it is appreciated that the system 10 is not limited to the above processes.

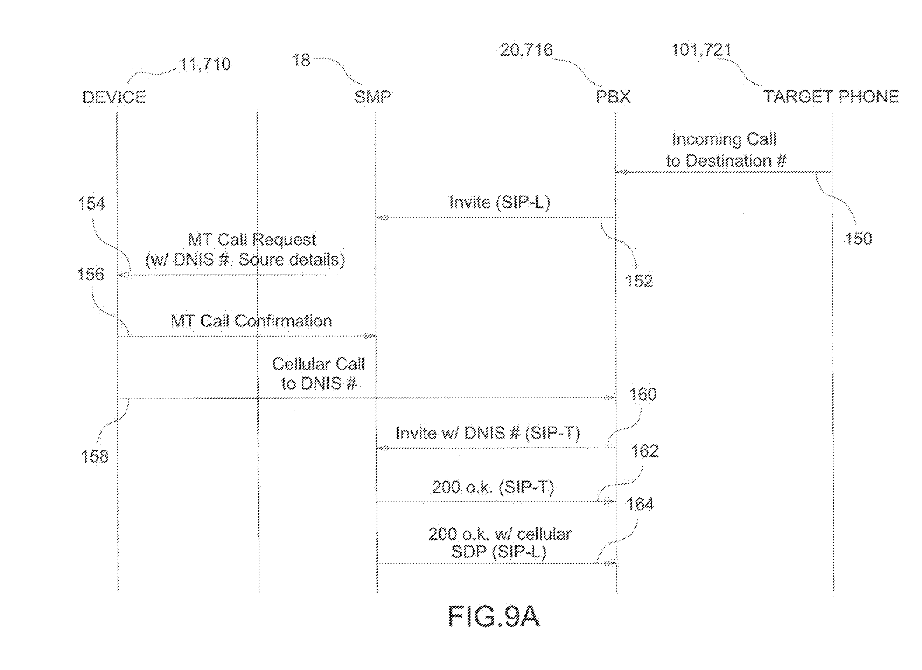

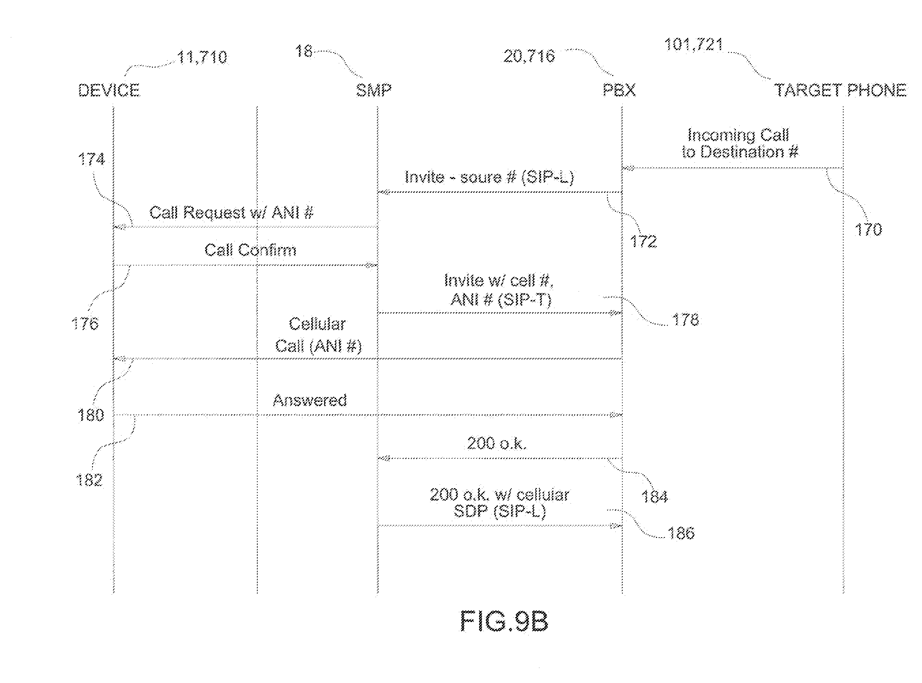

Figures 9A and 9B are signaling diagrams illustrating a mobile terminated call utilizing SIP 80. Specifically, and for the purposes of this disclosure, the target phone 721, 101 is originating the call, which will send a call to the mobile device 11, 710. Turning first to Figure 9A, an incoming call is made from the target phone 721, 101 to the PBX 716, 20 (block 150). When the call is received at the PBX 716, 20 the PBX 716, 20 sends an invitation to the SMP 18 over SIP-L (block 152).

In response to the invitation, the SMP 18 can send a call request with the DNIS number and source details to the device 710, 11 (block 154), which is confirmed to the SMP (block 156). In addition to confirming the call, the mobile device 710, 11 can send a cellular call to the DNIS number at the PBX 716, 20 (block 158). Again, as the DNIS number is routed in the dialing plans to the SMP 18, upon receipt of the cellular call, the PBX 716, 20 sends an invite over SIP-T to the SMP 18 with the DNIS number (block 160). In response to the invite, a "200 OK" signal is sent over SIP-T from the SMP 18 to the PBX 716, 20 acknowledging that the call leg to the mobile device 710, 11 is established (block 162). Finally, the initial invite (block 152) is acknowledged with the "200 OK" signal with the cellularSDP, at which point the call legs are joined and the target phone 721, 101 and device 710, 11 can communicate with each other on the call.

The diagram shown in Figure 9A can be said to illustrate a "mobile-initiated" call, because, as discussed above with respect to Figures 8A and 8B, the SMP 18 presents the mobile device 710, 11 with the DNIS number at the PBX 716, 20 into which to call. However, it is also possible to employ a "PBX-initiated" mobile terminated call, as shown in Figure 9B, where the PBX 716, 20 sends an incoming call to the device 710, 11 with the ANI number of the target phone 721, 101.

Specifically, similar to the mobile initiated call described above and shown in Figure 9A, the target phone 721, 101 sends an incoming call to the destination number of the device, which is received at the PBX 716, 20 (block 170). Upon receipt of the call, the PBX 716, 20 sends an invitation over SIP-L to the SMP 18 (block 172) with the source number of the target phone 721, 101. In response to the invite, the SMP 18 sends a call request with the source number to the device 710, 11 (block 174), with the ANI number the device should expect in the incoming call, the call request being confirmed by the device (block 176). At this point in the PBX-initiated call, the SMP 18 can send an invitation over SIP-T to the PBX 716, 20 with the cellular number and ANI numberto use (block 178), prompting the PBX 716, 20 to make a cellular call to the device 710, 11 with the ANI number (block 180), prompting the device to ring. The device 11 answers the call (block 182), and a "200 OK" signal can be sent from the PBX 716, 20 to the SMP 18, acknowledging that the cellular call leg to the device 710, 11 is established (block 184). In response, a "200 OK" signal can also be sent from the SMP 18 to the PBX 716, 20, acknowledging that the call leg to the target phone 721, 101 is also established (block 186). The SMP 18 shuffles the SDP to connect the call legs, the call legs are joined, and the target phone 721, 101 and device 710 11 can communicate with each other on the call.

As discussed above with respect to FIGs. 8A and 8B, the SMP 18 can retain control of signaling between the target phone 721, 101 and the mobile device 710, 11 in both the mobile-initiated and PBX-initiated calls. Again, the decision to proceed with a mobile-initiated call or a PBX-initiated call is based on policy and may be set by a system administrator. In some cases, it may be more efficient or cost effective for the administrator to decide that PBX-initiated calls should be used, and in other cases, it may be more efficient or cost effective for mobile-initiated calls to be utilized. As these policy decisions may vary by organization and are not imperative to the scope of the present application, they will not be discussed in further detail.

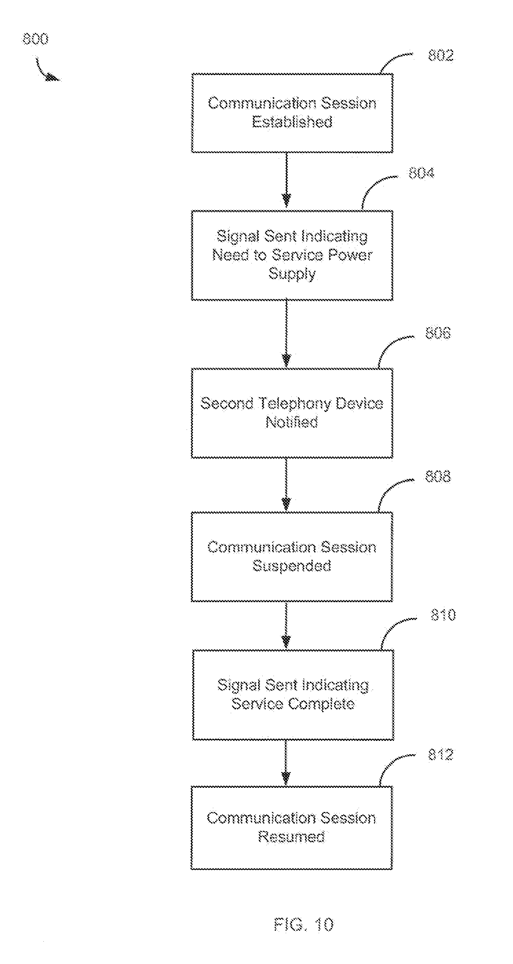

Reference will now be made to Figure 10, which shows a flow diagram representing an example of a method 800 for maintaining an ongoing, or previously-established, communication session between a first telephony device 710, 11 and at least one second telephony device 721, 101 while the power supply of the first telephony device 710 is serviced. Method 800 is suitable for use, for example, in conjunction with systems 10, 700 of Figures 1 and/or 7 and telephony device 11 of Figure 6, in implementing the disclosure herein.

A method 800 can be considered to begin at 802, where a communication session, such as a voice communication session, has been established between a first telephony device 710 and at least one second telephony device 721, as for example as described in connection with Figures 8 and 9. Such communication may be established through PSTN 40, PLMN 50, and/or other communication cloud 715. The first telephony device 710's end of the call session can be controlled by a call control server 705, which may for example include a PBX 716, 20 and/or an SMP 18.

When, for example, a first telephony device 710 recognizes that a power supply is in need of servicing, it may notify a user of the device. For example, the first telephony device 710 may display a message on a display of the device 142, relay an audio or other sensory message through a speaker or other audio port 156 of the device or a particular alert, such as an audio alert (e.g. tone or ring), a visual alert (e.g. LED), or a vibration may be generated. A user of the firsttelephony device 710 may then decide whether to service the power supply without terminating the communication session or to end the communication session pending the service process and later resume the session.

If a user of the first telephony device 710 decides to service the power supply but maintain the communication session, at 804, a signal can be sent from the first device 710 to the call control server 705 indicating that the power supply of the first telephony device 710 needs to be serviced. In some embodiments, this signal may be automatically generated by the first telephony device 710 when, for example, a covering of the power supply or the power supply itself is removed or otherwise displaced. Alternatively, the first telephony device 710 may send such a signal in response to an indication from the user that the communication session should be suspended while the power supply is serviced. Such an indication may be input by the user in response to a request for confirmation by the first telephony device 710.

At 806, the call control server 705 may send a notification signal to the second telephony device 721 through, for example, a communication cloud 715 notifying the second telephony device 721 that the communication will be temporarily suspended while the other telephony device is being serviced. In some embodiments, the second telephony device may notify a user of the second telephony device 721 that the communication is temporarily suspended, such as by playing music or delivering an auditory or visual message. In some embodiments, the user of the second telephony device 721 may be informed of the reason for suspending the communication, i.e., that the first telephony device 710 is being serviced.

At 808, the pending or otherwise previously-established communication session between the first telephony device 710 and the at least one second telephony device 721 may be suspended (i.e., placed in a hold state). In some embodiments, this may require the call control server 705 maintain one end of the communication between the call control server 705 and the at least one second telephony device 721. The end of the communication session between the first telephony device 710 and the call control server 705 may need to be temporarily disconnected or in some way suspended while the power supply is serviced.

At 810, a signal can be received by the call control server 705 from the first telephony device 710 indicating that the service has been completed. Such signal may be generated when there is some indication that the power supply has been serviced. For example, the battery on the first telephony device 710 may have been replaced. In some embodiments, this signal may be automatically generated by the first telephony device 710 when a covering of the power supply or the power supply itself is replaced. Alternatively, the first telephony device 710 may send the signal in response to an indication from the user that the communication session should be resumed. This indication may be provided by the user in response to a request for confirmation by the first telephony device 710.

At 812, the communication session between the first telephony device 710 and the second telephony device 721 may be re-established. For example, the call control server 705 may reestablish a connection to the first telephony device 710 and connect this call leg to the call leg which had been maintained to the second telephony device 721. In some embodiments, the call control server 705 may then optionally wait for a confirmation from the second telephony device 721 indicating that the communication session may be resumed before re-establishing the communication session.

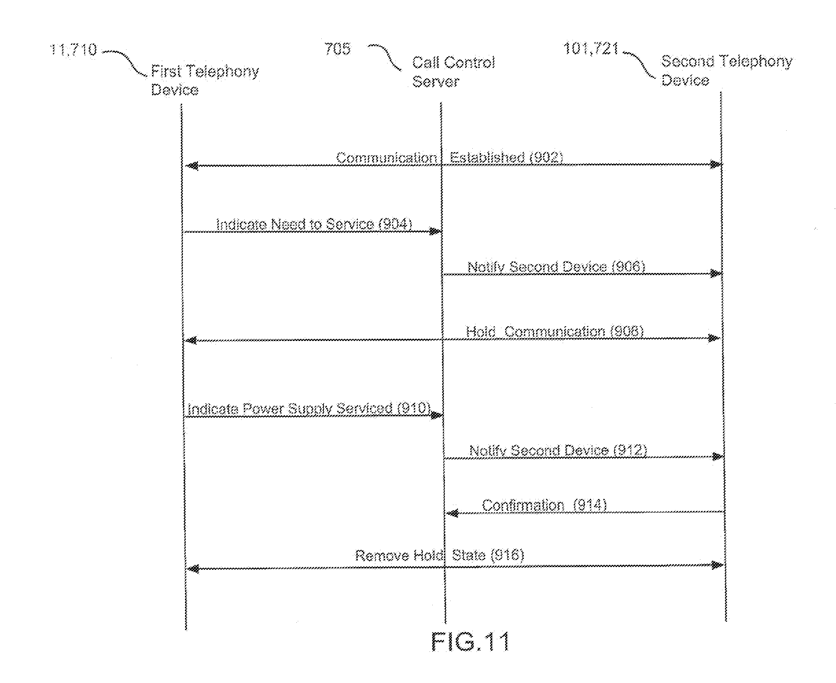

Reference is now made to Figure 11, which shows example command signal interchange operations of a system 10, 700 for maintaining a previously-established communication session between a first telephony device 710 and a second telephony device 721, while a power supply of the firsttelephony device 710 is being serviced. Signals provided by the various devices referred to in Figure 11 may be provided, for example, according to the SIP protocol.

At 902, a communication session is pre-existing, i.e., has previously been established between the telephony device 710 and at least one second telephony device 721. The communication may be established through PSTN 40, PLMN 50, or other communication cloud 715. The first telephony device 710's end of the call session can be controlled by a call control server 705.

At 904, the first telephony device 710 may send a signal to the call control server 705 indicating that the power supply of the first telephony device 710 needs to be serviced. For example, the first telephony device 710 may require a battery which may be low on power and be required to be replaced or charged in order to continue the communication. When the call control server 705 has received the signal indicating the need to service the first telephony device 710, it may notify the at least one second telephony device 721 at 906. Such a notification may, for example, indicate to the user of the at least one second telephony device 721 that the first telephony device 710 requires servicing and that the communication must be temporarily suspended.

At 908, the call control server 705 may place the communication session between the first telephony device 710 and the at least one second telephony device 721 in a hold state. This may be done, for example, by placing the end of the communication session between the call control server 705 and the second telephony device 721 in a hold state. The end of the communication between the first telephony device 710 and the call control server 705 may be temporarily terminated or otherwise suspended in order to allow the power supply of the first telephony device 710 to be serviced.

At 910, the first telephony device 710 may send a signal to the call control server 705 indicating that the power supply has been serviced and that the communication with the at least one second telephony device 721 may be resumed. At 912, the call control server 705 may send notification signals to the second telephony device 721 indicating that the power supply of the first telephony device 710 has been serviced and that the communication session may be resumed.

The call control server 705 may, at 914, receive a confirmation from the second telephony device 721 indicating that the communication session may be resumed.

At 916, the hold state may be removed from the communication session. In some embodiments, this may be done by removing a hold state on the end of the communication between the call control server 705 and the at least one second telephony device 721 and by re-establishing the communication end between the first telephony device 710 and the call control server 705.

While the invention has been described and illustrated in connection with specific, presently-preferred embodiments, many variations and modifications may be made without departing from the scope of the invention. The invention is therefore not to be limited to the exact components or details of methodology or construction set forth above. Except to the extent necessary or inherent in the processes themselves, no particular order to steps or stages of methods or processes described in this disclosure, including the Figures, is intended or implied. In many cases the order of process steps may be varied without changing the purpose, effect, or import of the methods described. The scope of the claims is to be defined solely by the appended claims, giving due consideration to the doctrine of equivalents and related doctrines.

## Claims

1. An enterprise telephony server (705) configured to maintain a communication session previously established between a first telephony device (710) and at least one second telephony device (721), by:
receiving from the first telephony device (710) a signal indicating that a power supply for the first telephony device (710) should be serviced;
placing the previously-established communication session in a hold state;
receiving from the first telephony device (710) a signal indicating that the power supply has been serviced; and
removing the previously established communication session from the hold state.

2. The server (705) of claim 1, wherein the communication session is controlled by the server (705).

3. The server (705) of claim 1 or 2, wherein the first telephony device (710) is controlled by the server (705).

4. The server (705) of any of claims 1 to 3, wherein the first telephony device (710) is an enterprise telephony device.

5. The server (705) of any of claims 1 to 4, further configured to initiate removing the previously established communication session from the hold state upon receipt of a confirmation from one of the at least one second telephony device (721).

6. The server (705) of any of claims 1 to 5, further configured to provide to the at least one second telephony device (721) a notification signal indicating that the communication session will be suspended while the first telephony device (710) is serviced.

7. The server (705) of claim 6, wherein the notification signal causes the at one second telephony device (721) to notify a user thereof that the communication session will be suspended while the first telephony device (710) is serviced.

8. The server (705) of any of claims 1 to 7, wherein the power supply is a battery.

9. The server (705) of claim 8, wherein servicing of the power supply comprises replacing the battery.

10. The server (705) of any of claims 1 to 9, further configured to initiate placing the previously-established communication session in a hold state by least one of: placing an end of a call leg of the communication session associated with the first telephony device (710) in a hold state and placing an end of a call leg of the communication session associated with the at least one second telephony device (721) in a hold state.

11. A method of maintaining a communication session previously established between a first telephony device (710) and at least one second telephony device (721), the first telephony device (710) comprising at least one data processor and media readable by the at least one data processor comprising coded program instructions, the method comprising:
receiving from the first telephony device (710) a signal indicating that a power supply for the first telephony device (710) should be serviced;
placing the previously established communication session in a hold state;
receiving from the first telephony device (710) a signal indicating that the power supply has been serviced; and
removing the previously established communication session from the hold state.

12. A handheld telephony device (11, 710) controlled by an enterprise server (705) comprising a power supply (138), at least one wireless signal receiver (114), at least one wireless signal transmitter (116), at least one data processor (140), and media readable by the at least one data processor comprising coded program instructions adapted for maintaining a communication session previously established between the handheld telephony device (11, 710) and at least one second telephony device (721) by:
detecting that the power supply (138) should be serviced;
providing to the enterprise server (705) a first signal indicating that the power supply (138) should be serviced;
upon completion of a servicing of the power supply(138), providing the enterprise server (705) with a second signal indicating that the power supply (138) has been serviced; and
resuming the previously established communication session.

13. The handheld telephony device (11, 710) of claim 12, wherein the power supply (138) is a battery.

14. The handheld telephony device (11, 710) of claim 13, further configured to automatically generate the first signal when a battery cover on the device is displaced.

15. The handheld telephony device (11, 710) of claim 13, further configured to automatically generate the second signal when a battery cover on the device is replaced.

16. The handheld telephony device (11, 710) of any of claims 12 to 15, further configured to receive confirmation from the user prior to providing the first signal.

17. The handheld telephony device (11, 710) of any of claims 12 to 16, further configured to receive confirmation from the user prior to providing the second signal.

## Patentansprüche

1. Unternehmenstelefonserver (705), der dazu konfiguriert ist, eine Kommunikationssitzung, die zuvor zwischen einer ersten Telefonvorrichtung (710) und mindestens einer zweiten Telefonvorrichtung (721) etabliert worden ist, durch Folgendes aufrechtzuerhalten:
Empfangen eines Signals, das angibt, dass eine Energieversorgung für die erste Telefonvorrichtung (710) gewartet werden sollte, von der ersten Telefonvorrichtung (710),
Versetzen der zuvor etablierten Kommunikationssitzung in einen Haltezustand,
Empfangen eines Signals, das angibt, dass die Energieversorgung gewartet worden ist, von der ersten Telefonvorrichtung (710), und
Lösen der zuvor etablierten Kommunikationssitzung von dem Haltezustand.

2. Server (705) nach Anspruch 1, wobei die Kommunikationssitzung von dem Server (705) gesteuert wird.

3. Server (705) nach Anspruch 1 oder 2, wobei die erste Telefonvorrichtung (710) von dem Server (705) gesteuert wird.

4. Server (705) nach einem der Ansprüche 1 bis 3, wobei die erste Telefonvorrichtung (710) eine Unternehmenstelefonvorrichtung ist.

5. Server (705) nach einem der Ansprüche 1 bis 4, der ferner dazu konfiguriert ist, das Lösen der zuvor etablierten Kommunikationssitzung von dem Haltezustand nach einem Empfangen einer Bestätigung von einer der mindestens einen zweiten Telefonvorrichtung (721) einzuleiten.

6. Server (705) nach einem der Ansprüche 1 bis 5, der ferner dazu konfiguriert ist, der mindestens einen zweiten Telefonvorrichtung (721) ein Mitteilungssignal bereitzustellen, das angibt, dass die Kommunikationssitzung ausgesetzt werden wird, während die erste Telefonvorrichtung (710) gewartet wird.

7. Server (705) nach Anspruch 6, wobei das Mitteilungssignal veranlasst, dass die mindestens eine zweite Telefonvorrichtung (721) einen Benutzer davon benachrichtigt, dass die Kommunikationssitzung ausgesetzt werden wird, während die erste Telefonvorrichtung (710) gewartet wird.

8. Server (705) nach einem der Ansprüche 1 bis 7, wobei die Energieversorgung eine Batterie ist.

9. Server (705) nach Anspruch 8, wobei das Warten der Energieversorgung ein Ersetzen der Batterie aufweist.

10. Server (705) nach einem der Ansprüche 1 bis 9, der ferner dazu konfiguriert ist, ein Versetzen der zuvor etablierten Kommunikationssitzung in einen Haltezustand durch mindestens einem aus Folgendem einzuleiten:
Versetzen eines Endes einer Anrufteilstrecke der Kommunikationssitzung, das mit der ersten Telefonvorrichtung (710) verknüpft ist, in einen Haltezustand und
Versetzen eines Endes einer Anrufteilstrecke der Kommunikationssitzung, das mit mindestens einer zweiten Telefonvorrichtung (721) verknüpft ist, in einen Haltezustand.

11. Verfahren zum Aufrechterhalten einer Kommunikationssitzung, die zuvor zwischen einer ersten Telefonvorrichtung (710) und mindestens einer zweiten Telefonvorrichtung (721) etabliert worden ist, wobei die erste Telefonvorrichtung (710) mindestens einen Datenprozessor und Medien aufweist, die von dem mindestens einen Datenprozessor lesbar sind, mit codierten Programmanweisungen, wobei das Verfahren Folgendes aufweist:
Empfangen eines Signals, das angibt, dass eine Energieversorgung für die erste Telefonvorrichtung (710) gewartet werden sollte, von der ersten Telefonvorrichtung (710),
Versetzen der zuvor etablierten Kommunikationssitzung in einen Haltezustand,
Empfangen eines Signals, das angibt, dass die Energieversorgung gewartet worden ist, von der ersten Telefonvorrichtung (710), und
Lösen der zuvor etablierten Kommunikationssitzung von dem Haltezustand.

12. Handgehaltene Telefonvorrichtung (11, 710), die von einem Unternehmensserver (705) gesteuert ist, mit einer Energieversorgung (138), mindestens einem Drahtlossignalempfänger (114), mindestens einem Drahtlossender (116), mindestens einem Datenprozessor (140) und Medien, die von dem mindestens einen Datenprozessor lesbar sind, mit codierten Programmanweisungen, die dazu ausgelegt sind, eine zuvor etablierte Kommunikationssitzung zwischen der handgehaltenen Telefonvorrichtung (11, 710) und mindestens einer zweiten Telefonvorrichtung (721) durch Folgendes aufrechtzuerhalten:
Erfassen, dass die Energieversorgung (138) gewartet werden sollte,
Liefern eines ersten Signals an den Unternehmensserver (705), dass die Energieversorgung (138) gewartet werden sollte,
nach Vollendung eines Wartens der Energieversorgung (138), Versorgen des Unternehmensservers (705) mit einem zweiten Signals, das angibt, dass die Energieversorgung (138) gewartet worden ist, und
Fortsetzen der zuvor etablierten Kommunikationssitzung.

13. Handgehalte Telefonvorrichtung (11, 710) nach Anspruch 12, wobei die Energieversorgung (138) eine Batterie ist.

14. Handgehalte Telefonvorrichtung (11, 710) nach Anspruch 13, die ferner dazu konfiguriert ist, das erste Signal automatisch zu erzeugen, wenn eine Batterieabdeckung der Vorrichtung abgesetzt wird.

15. Handgehalte Telefonvorrichtung (11, 710) nach Anspruch 13, die ferner dazu konfiguriert ist, das zweite Signal automatisch zu erzeugen, wenn eine Batterieabdeckung der Vorrichtung wieder angebracht wird.

16. Handgehalte Telefonvorrichtung (11, 710) nach einem der Ansprüche 12 bis 15, die ferner dazu konfiguriert ist, vor dem Bereitstellen des ersten Signals eine Bestätigung von dem Benutzer zu empfangen.

17. Handgehalte Telefonvorrichtung (11, 710) nach einem der Ansprüche 12 bis 16, die ferner dazu konfiguriert ist, vor dem Bereitstellen des zweiten Signals eine Bestätigung von dem Benutzer zu empfangen.

## Revendications

1. Serveur de téléphonie d'entreprise (705) configuré pour maintenir une session de communication précédemment établie entre un premier dispositif de téléphonie (710) et au moins un deuxième dispositif de téléphonie (721), par le fait :
de recevoir à partir du premier dispositif de téléphonie (710) un signal indiquant qu'un bloc d'alimentation pour le premier dispositif de téléphonie (710) doit être entretenu ;
de mettre la session de communication précédemment établie dans un état d'attente ;
de recevoir à partir du premier dispositif de téléphonie (710) un signal indiquant que le bloc d'alimentation a été entretenu ; et
de retirer la session de communication préalablement établie de l'état d'attente.

2. Serveur (705) de la revendication 1, dans lequel la session de communication est commandée par le serveur (705).

3. Serveur (705) de la revendication 1 ou 2, dans lequel le premier dispositif de téléphonie (710) est commandé par le serveur (705).

4. Serveur (705) de l'une des revendications 1 à 3, dans lequel le premier dispositif de téléphonie (710) est un dispositif de téléphonie d'entreprise.

5. Serveur (705) de l'une des revendications 1 à 4, configuré en outre pour initier le retrait de la session de communication précédemment établie de l'état d'attente lors de la réception d'une confirmation à partir de l'un de l'au moins un deuxième dispositif de téléphonie (721).

6. Serveur (705) de l'une des revendications 1 à 5, configuré en outre pour fournir à l'au moins un deuxième dispositif de téléphonie (721) un signal de notification indiquant que la session de communication sera suspendue alors que le premier dispositif de téléphonie (710) est entretenu.

7. Serveur (705) de la revendication 6, dans lequel le signal de notification amène l'au moins un deuxième dispositif de téléphonie (721) à notifier un utilisateur de celui-ci que la session de communication sera suspendue alors que le premier dispositif de téléphonie (710) est entretenu.

8. Serveur (705) de l'une des revendications 1 à 7, dans lequel le bloc d'alimentation est une batterie.

9. Serveur (705) de la revendication 8, dans lequel l'entretien du bloc d'alimentation comprend le remplacement de la batterie.

10. Serveur (705) de l'une des revendications 1 à 9, configuré en outre pour initier la mise de la session de communication précédemment établie dans un état d'attente par au moins l'une : d'une mise d'une extrémité d'une branche d'appel de la session de communication associée au premier dispositif de téléphonie (710) dans un état d'attente et d'une mise d'une extrémité d'une branche d'appel de la session de communication associée à l'au moins un deuxième dispositif de téléphonie (721) dans un état d'attente.

11. Procédé de maintien d'une session de communication précédemment établie entre un premier dispositif de téléphonie (710) et au moins un deuxième dispositif de téléphonie (721), le premier dispositif de téléphonie (710) comprenant au moins un processeur de données et un support lisible par l'au moins un processeur de données comprenant des instructions de programme codées, le procédé comprenant le fait :
de recevoir à partir du premier dispositif de téléphonie (710) un signal indiquant qu'un bloc d'alimentation pour le premier dispositif de téléphonie (710) doit être entretenu ;
de mettre la session de communication précédemment établie dans un état d'attente ;
de recevoir à partir du premier dispositif de téléphonie (710) un signal indiquant que le bloc d'alimentation a été entretenu ; et
de retirer la session de communication précédemment établie de l'état d'attente.

12. Dispositif de téléphonie portatif (11, 710) commandé par un serveur d'entreprise (705) comprenant un bloc d'alimentation (138), au moins un récepteur de signal sans fil (114), au moins un émetteur de signal sans fil (116), au moins un processeur de données (140) et un support lisible par l'au moins un processeur de données comprenant des instructions de programme codées adaptées pour maintenir une session de communication précédemment établie entre le dispositif de téléphonie portatif (11, 710) et au moins un deuxième dispositif de téléphonie (721) par le fait :
de détecter que le bloc d'alimentation (138) doit être entretenu ;
de fournir au serveur d'entreprise (705) un premier signal indiquant que le bloc d'alimentation (138) doit être entretenu ;
de fournir au serveur d'entreprise (705), lors de l'achèvement d'un entretien du bloc d'alimentation (138), un deuxième signal indiquant que le bloc d'alimentation (138) a été entretenu ; et
de reprendre la session de communication précédemment établie.

13. Dispositif de téléphonie portatif (11, 710) de la revendication 12, dans lequel le bloc d'alimentation (138) est une batterie.

14. Dispositif de téléphonie portatif (11, 710) de la revendication 13, configuré en outre pour générer automatiquement le premier signal lorsqu'un couvercle de batterie sur le dispositif est déplacé.

15. Dispositif de téléphonie portatif (11, 710) de la revendication 13, configuré en outre pour générer automatiquement le deuxième signal lorsqu'un couvercle de batterie sur le dispositif est remplacé.

16. Dispositif de téléphonie portatif (11, 710) de l'une des revendications 12 à 15, configuré en outre pour recevoir une confirmation de l'utilisateur avant de fournir le premier signal.

17. Dispositif de téléphonie portatif (11, 710) de l'une des revendications 12 à 16, configuré en outre pour recevoir une confirmation de l'utilisateur avant de fournir le deuxième signal.
